# EUROPÄISCHE PATENTSCHRIFT

(11) **EP 2 629 164 B1**
(45) Veröffentlichungstag und Bekanntmachung des Hinweises auf die Patenterteilung: **17.12.2014**
(21) Anmeldenummer: 12155367.1
(22) Anmeldetag: 14.02.2012
(51) Int. Cl.: G05B 19/418, H04L 12/24

(54) **Verfahren und Konfigurationskomponente zur Zuweisung eines Stationsnamens zu Komponenten einer industriellen Automatisierungsanordnung**
Method and configuration component for allocating a station name to components of an industrial automation assembly
Procédé et composant de configuration pour l'attribution d'un nom de station au composant d'un agencement d'automatisation industriel

(43) Veröffentlichungstag der Anmeldung: 21.08.2013
(73) Patentinhaber: Siemens Aktiengesellschaft, 80333 München (DE)
(72) Erfinder: Biehler, Georg, 90453 Nürnberg (DE)

(56) Entgegenhaltungen:
- US-A- 6 032 208
- US-B1- 6 728 262

## Beschreibung

Die Erfindung betrifft ein Verfahren zur Zuweisung eines Stationsnamens zu einer Anzahl Komponenten einer industriellen Automatisierungsanordnung gemäß dem Oberbegriff des Patentanspruchs 1, und eine Konfigurierungskomponente zur Zuweisung eines Stationsnamens zu einer Anzahl Komponenten einer industriellen Automatisierungsanordnung gemäß dem Oberbegriff des Patentanspruchs 10.

In Datennetzwerken haben Netzwerkkomponenten eine Netzwerkadresse. Bei den bekannten Ethernet-basierten Netzwerken ist dies beispielsweise die IP-Adresse (IP = Internet Protokoll), wobei die Komponenten (Netzwerkgeräte) zusätzlich noch eine Hardware-Adresse aufweisen, die sog. MAC-Adresse (Media-Access-Control-Adresse). Während letztgenannte MAC-Adresse jeder Komponente fest einprogrammiert ist und zudem jede MAC-Adresse nur einmalig vergeben wird, können die IP-Adressen dynamisch zugewiesen werden, so dass ein- und dasselbe Gerät bzw. ein- und dieselbe Komponente zu verschiedenen Zeitpunkten unterschiedliche Netzwerkadressen aufweisen kann.

In industriellen Automatisierungsanordnungen werden häufig Datennetze mit für diesen Einsatzzweck optimierten Kommunikationsprotokollen verwendet, beispielsweise das Protokoll PROFINET IO. Zur Sicherstellung einer korrekten Kommunikation auch bei sich ändernden Netzwerkadressen (IP-Adressen) oder beim Austausch von Komponenten, also bei Änderungen der MAC-Adressen, basiert der Meldungsaustausch in industriellen Automatisierungsanordnungen im produktiven Betrieb vorwiegend auf Gerätenamen, in diesem Kontext meist "Stationsname" genannt, die den Komponenten zugewiesen werden. Diese Namen sind ebenfalls in einem Kommunikationsnetzwerk bzw. Teil-Netzwerk eindeutig; der entsprechende Parameter heißt beispielsweise "NameOfStation". Bei der Inbetriebnahme einer Automatisierungsanordnung oder eines Netzwerk-Segments müssen also alle Komponenten, die nachfolgend am Meldungsaustausch über das Netzwerk teilnehmen sollen, mit jeweils einem eindeutigen Stationsnamen "NameOfStation" konfiguriert werden. Dazu stehen in den bekannten Programmierumgebungen, beispielsweise die Produkte STEP7 oder TIA-Portal der Firma Siemens, Funktionen bereit, beispielsweise "Ethernet-Teilnehmer bearbeiten" oder "Gerätenamen vergeben". Ebenso sind eigenständige Konfigurierungs-Tools oder Konfigurierungskomponenten bekannt, beispielsweise die Programme PST (Primary Setup Tool) oder PRONETA. Hierbei wird eine - ggf. automatisch erstellte - Liste mit allen aktiven Komponenten des Netzwerks bzw. des Teil-Netzwerks (Netzsegmentes) erstellt, wobei ein Anwender für jedes einzelne Gerät in seiner projektierten Konfiguration diese Liste, die sog. "Lifelist", durchsuchen muss, um das Gerät bzw. die Komponente zu identifizieren, welcher ein projektierter Gerätename zugewiesen werden soll.

Insbesondere bei komplexen Automatisierungsanordnungen mit vielen Komponenten und Geräten kann diese "Lifelist" sehr umfangreich sein, was den Zuweisungsvorgang unübersichtlich und komplex macht. Zur Abhilfe ist es bekannt, in der "Lifelist" nur Geräte und Komponenten eines bestimmten Gerätetyps anzuzeigen oder nur solche Geräte und Komponenten anzuzeigen, denen noch kein Gerätename zugeordnet ist. Dadurch kann das geschilderte Problem zwar gemildert, aber meist nicht beseitigt werden. Ebenfalls ist es möglich, in der "Lifelist" nach einer bestimmten, bekannten MAC-Adresse zu suchen, was jedoch bedeutet, dass ein Anwender vorher wissen muss, welche MAC-Adresse ein zu konfigurierendes Gerät oder Komponente aufweist. Insgesamt ist der Vorgang, die Komponenten und Geräte eines Netzwerks bzw. eines Netzsegmentes mit Gerätenamen zu konfigurieren, wenig benutzerfreundlich und damit oft fehleranfällig.

Derartige Konfigurierungen von Automatisierungsanordnungen sind z. B. aus der US 6,728,262 B1 oder aus der US 6,032,208 bekannt.

Es ist daher eine Aufgabe der vorliegenden Erfindung, die Zuweisung von Gerätenamen in industriellen Automatisierungsanordnungen zu vereinfachen.

Es ist eine Kernidee zur erfindungsgemäßen Lösung der beschriebenen Aufgabe, dass die projektierten Geräte mit ihren projektierten Gerätenamen jeweils projektierte (also geplante) Eigenschaften aufweisen, wobei die tatsächlich vorhandenen Komponenten und Geräte in der tatsächlich existierenden Automatisierungsanordnung im Wesentlichen den projektierten Komponenten und Geräten entsprechen sollen, also ähnliche Eigenschaften aufweisen müssen. Erfindungsgemäß soll daher ein projektierter Gerätename bzw. Stationsname demjenigen realen Gerät oder Komponente zugewiesen werden, welches einem projektierten Gerät bezüglich seiner Eigenschaften am ähnlichsten ist oder sogar übereinstimmt. Da in der "realen Welt" nicht immer genau diejenigen Geräte mit denjenigen Eigenschaften oder mit demjenigen Ausbau eingesetzt werden, die dafür ursprünglich vorgesehen waren bzw. projektiert sind, soll erfindungsgemäß ein Maß für die Übereinstimmung, ein sog. "Ähnlichkeitswert", zwischen jeder realen Komponente und jeder projektierten Komponente bestimmt werden, wobei bei einer Übereinstimmung oder bei einem sehr hohen Ähnlichkeitswert automatisch ein Stationsname für das reale Gerät jeweils vorgeschlagen oder sogar sogleich automatisch zugewiesen werden soll.

Die Aufgabe wird insbesondere durch ein Verfahren gemäß dem Patentanspruch 1 und durch eine Konfigurierungskomponente gemäß dem Patentanspruch 11 gelöst.

Dabei wird ein Verfahren zur Zuweisung jeweils eines Stationsnamens zu einer Anzahl Komponente einer industriellen Automatisierungsanordnung vorgeschlagen, wobei die Komponenten mittels eines Datennetzes mit einer Konfigurierungskomponente verbunden sind, und wobei während einer Projektierungsphase einige oder alle der Komponenten in einem Projekt der Konfigurierungskomponente verzeichnet werden, wobei diesen projektierten Komponenten in dem Projekt jeweils ein Stationsname und eine Anzahl projektierter Eigenschaften zugeordnet werden. Dabei werden zur Zuweisung während einer Inbetriebnahmephase oder zur Laufzeit der Automatisierungsanordnung durch die Konfigurierungskomponente folgende Verfahrensschritte durchgeführt: In einem ersten Schritt werden eine Anzahl oder alle Komponenten, die über das Datennetz erreichbar sind, ermittelt, wonach in einem zweiten Schritt Informationen über jeweilige tatsächliche Eigenschaften der ermittelten Komponenten von diesen abgerufen und gespeichert werden, wonach in einem dritten Schritt für jede ermittelte Komponente ein jeweiliger Ähnlichkeitswert in Bezug auf die projektierten Komponenten anhand des Grades der Übereinstimmung der tatsächlichen Eigenschaften der ermittelten Komponenten mit den projektierten Eigenschaften der projektierten Komponenten bestimmt wird, und wonach in einem vierten Schritt einigen oder allen ermittelten Komponenten jeweils der projektierte Stationsname derjenigen projektierten Komponente zugewiesen wird, zu der der beste Ähnlichkeitswert besteht. Durch dieses Verfahren kann eine weitgehend automatische Zuweisung der projektierten Stationsnamen zu den tatsächlich in der Automatisierungsanordnung vorhandenen Komponenten und Geräten vorgenommen werden.

Die Lösung der Aufgabe sieht außerdem eine Konfigurierungskomponente zur Zuweisung jeweils eines Stationsnamens zu einer Anzahl von Komponenten einer industriellen Automatisierungsanordnung vor, wobei die Komponenten mittels eines Datennetzes mit der Konfigurierungskomponente verbunden sind, wobei einige oder alle der Komponenten in einem Projekt der Konfigurierungskomponente verzeichnet sind, wobei diesen projektierten Komponenten in dem Projekt jeweils ein Stationsname und eine Anzahl projektierter Eigenschaften zugeordnet sind. Dabei ist die Konfigurierungskomponente derart eingerichtet, dass durch diese während einer Inbetriebnahmephase oder zu einer Laufzeit der Automatisierungsanordnung in einem ersten Schritt eine Anzahl oder alle Komponenten, die über das Datennetz erreichbar sind, ermittelt werden, in einem zweiten Schritt Informationen über jeweilige tatsächliche Eigenschaften der ermittelten Komponenten von diesen abgerufen und gespeichert werden, in einem dritten Schritt für jede ermittelte Komponente ein jeweiliger Ähnlichkeitswert in Bezug auf die projektierten Komponenten anhand des Grades der Übereinstimmung der tatsächlichen Eigenschaften der ermittelten Komponenten mit den projektierten Eigenschaften der projektierten Komponenten bestimmt wird, und in einem vierten Schritt einigen oder allen ermittelten Komponenten jeweils der projektierte Stationsname derjenigen projektierten Komponente zugewiesen wird, zu der der beste Ähnlichkeitswert besteht. Durch eine solche Konfigurierungskomponente können die im Zusammenhang mit dem erfindungsgemäßen Verfahren beschriebenen Vorteile realisiert werden.

Vorteilhafte Ausgestaltungen des erfindungsgemäßen Verfahrens sind in den abhängigen Patentansprüchen 2 bis 10 angegeben; vorteilhafte Ausgestaltungen der erfindungsgemäßen Konfigurierungskomponente sind in den abhängigen Patentansprüchen 12 bis 20 angegeben. Die in Bezug auf das Verfahren beschriebenen Merkmale und deren Vorteile gelten sinngemäß auch für die erfindungsgemäße Konfigurierungskomponente, und umgekehrt. Die in den abhängigen Patentansprüchen beschriebenen Merkmale und deren Vorteile können sowohl einzeln, als auch in freier Kombination miteinander realisiert sein. Nachfolgend werden die vorteilhaften Ausgestaltungen anhand des Verfahrens beschrieben; sie gelten sinngemäß selbstverständlich auch für die erfindungsgemäße Konfigurierungskomponente.

In einer vorteilhaften Ausgestaltung können Nachbarschaftsbeziehungen zwischen den tatsächlich vorhandenen Komponenten und Geräten festgestellt werden und in Bezug gesetzt werden zu Nachbarschaftsbeziehungen zwischen den projektierten Komponenten. Dies bedeutet, dass beispielweise festgestellt werden kann, welches "benachbarte" Gerät oder Komponente an einem bestimmten Netzwerkanschluss eine Komponente angeschlossen ist, wobei in der projektierten Automatisierungsanordnung ebenfalls festgestellt werden kann, welches "benachbarte" Gerät oder Komponente für einen bestimmten Netzwerkanschluss einer projektierten Komponente vorgesehen ist. Bei der Übereinstimmung dieser Nachbarschaftsbeziehungen kann ein Ähnlichkeitswert zwischen der betrachteten realen und der betrachteten projektierten Komponente erhöht werden, anderenfalls verringert werden.

Eine weitere Vereinfachung des Verfahrens und damit eine Erhöhung der Funktionssicherheit ist gegeben, wenn bei den projektierten und bei den ermittelten (realen) Komponenten jeweils nach Gerätetypen unterschieden wird, wobei im dritten Schritt des Verfahrens die Ähnlichkeitswerte jeweils zwischen projektierten und ermittelten Komponenten desselben Gerätetyps bestimmt und in dem vierten Schritt verwendet werden. Dies kann beispielsweise dadurch realisiert werden, dass ein Ähnlichkeitswert zwischen Komponenten unterschiedlichen Typs grundsätzlich auf Null gesetzt wird oder auf ähnliche Weise eine Ähnlichkeit ausgeschlossen wird. Bei Gerätetypen und Komponenten, die zwar nicht identisch sind, aber ein Substitut darstellen können (beispielsweise ein I/O-Modul mit 16-bit-Digitaleingang statt 8-bit-Digitaleingang) kann für diese Eigenschaft beispielsweise ein Mittelwert für den Ähnlichkeitswert verwendet bzw. zu einem bestehenden, aus anderen Eigenschaften gebildeten Ähnlichkeitswert addiert oder mit einem solchen multipliziert werden. Ebenso ist es erfindungsgemäß möglich, die ggf. vollautomatische Zuweisung auf bestimmte Gerätetypen zu beschränken, was ebenfalls die Betriebssicherheit erhöhen kann und es außerdem ermöglicht, eine komplexe Automatisierungsanordnung schrittweise in Betrieb zu nehmen.

Sofern eine ermittelte (aufgefundene) Komponente noch keine Netzwerkadresse (IP-Adresse) aufweist, ist es vorteilhaft, für den Vorgang der Zuweisung des Stationsnamens dieser Komponente eine temporäre Kommunikationsadresse (IP-Adresse) zuzuweisen.

Zur Verwaltung der Ähnlichkeitsbeziehungen zwischen den realen und den projektierten Komponenten, also den ermittelten und geplanten Komponenten, kann vorteilhaft zumindest eine Ähnlichkeitsmatrix erstellt werden, wobei in den Feldern der Ähnlichkeitsmatrix jeweils ein Ähnlichkeitswert zwischen einer projektierten (geplanten) und einer ermittelten (realen) der Komponenten speicherbar ist. Dabei kann jeder Ähnlichkeitswert aus den Vergleichen einer Vielzahl von einzelnen Eigenschaften gebildet werden, beispielsweise durch Addition oder Multiplikation einzelner eigenschaftsbezogener Ähnlichkeitswerte.

Vorteilhaft wird in dem Datennetz das Kommunikationsprotokoll PROFINET IO oder ein anderes für Automatisierungsanordnungen spezialisiertes Kommunikationsprotokoll verwendet, weil es damit möglich ist, die für Automatisierungskomponenten maßgeblichen Eigenschaften aus den realen, ermittelten Komponenten auszulesen, beispielsweise durch spezielle Abfragemeldungen und dem dadurch möglichen Abruf standardisierter Datensätze, die in dem PROFINET IO-Protokoll oder ähnlichen Protokollen für die protokollgemäßen Komponenten definiert sind.

Während bei einer eindeutigen Abbildbarkeit der projektierten Komponenten auf die ermittelten, realen Komponenten die Ähnlichkeitswerte zwischen den einander entsprechenden Komponenten sehr hoch sein wird, und zu den anderen Komponenten ein niedriger Ähnlichkeitswert bestehen wird, können in realen Automatisierungsanordnungen auch indifferente Fälle auftreten. Dabei kann es von Vorteil sein, zumindest in den Fällen, in denen zwischen dem besten Ähnlichkeitswert und dem zweitbesten Ähnlichkeitswert vor einer automatischen Zuweisung eines Stationsnamens zu der betreffenden Komponente eine Abfragemeldung an einen Benutzer auszugeben, was bedeutet, dass eine Konfigurierungskomponente lediglich einen Vorschlag für eine Zuweisung unternimmt, die letztendliche Entscheidung über die Zuweisung eines Stationsnamens jedoch bei einem Benutzer verbleibt. Dazu können Schwellwerte für einen Mindestabstand zwischen dem besten und den nachfolgenden Ähnlichkeitswerten eingegeben werden. Solche Schwellwerte können sowohl absoluter, als auch relativer Natur sein.

Als besonders geeignet für die Erstellung und Auswertung von Ähnlichkeitswerten hat sich die Fuzzy-Logic herausgestellt, wobei mittels der für die Fuzzy-Logic bekannten Verfahren besonders gut die Tatsache berücksichtigt werden kann, dass die real aufgebaute Automatisierungsanordnung nicht in allen Einzelheiten der geplanten, projektierten Automatisierungsanordnung entspricht.

Ein Ausführungsbeispiel des erfindungsgemäßen Verfahrens wird nachfolgend anhand der Zeichnungen erläutert. Es dient gleichzeitig der Erläuterung einer erfindungsgemäßen Konfigurierungskomponente.

Dabei zeigen:
- Figur 1: in schematischer Darstellung eine Automatisierungsanordnung bestehend aus einem Datennetz, mehreren Komponenten (Automatisierungskomponenten) und einer Konfigurierungskomponente, und
- Figur 2: ein Beispiel für eine Ähnlichkeitsmatrix mit Ähnlichkeitswerten.

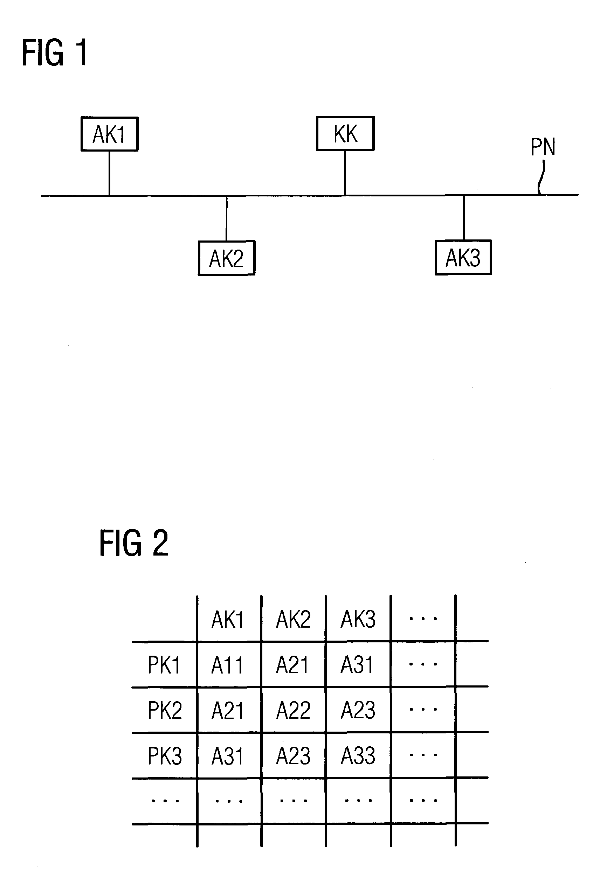

In der Figur 1 ist ein Datennetzwerk PN, beispielsweise ein PROFINET IO, ein Industrial-Ethernet oder ein anderes in der Automatisierungstechnik gebräuchliches Datennetzwerk dargestellt, an welchem die Komponenten AK1, AK2, AK3 angeschlossen sind. Dabei handelt es sich um gebräuchliche Mikroprozessorgesteuerte Geräte der Automatisierungstechnik, beispielsweise sog. Controller (PLC = Programable Logic Controller), Bedien- und Beobachtungsgeräte (HMI - Human Machine Interface), dezentrale Peripheriegeräte, Aktoren, Sensoren oder dergleichen. Außerdem ist an dem Datennetz PN eine Konfigurierungskomponente KK angeschlossen, wobei es sich dabei beispielsweise um eine bekannte Projektierungs- und Programmierungseinheit handeln kann, die jedoch zur Ausführung des erfindungsgemäßen Verfahrens programmiert ist. Im Folgenden soll angenommen werden, dass die Komponenten AK1, AK2, AK3 in einer Projektierungsphase einem sog. "Projekt" hinzugefügt wurden, also für ein Zusammenwirken zum Zwecke einer Ausführung einer Automatisierungsaufgabe vorgesehen wurden. Das "Projekt", in dem Gerätetyp, Geräte-Eigenschaften, Beziehungen zwischen den Komponenten AK1, AK2, AK3 und deren Software dokumentiert sind, ist als eine Datei oder als eine Vielzahl von zusammen gehörenden Dateien in der Konfigurierungskomponente KK gespeichert oder in einer alternativen Ausführungsform, zumindest durch die Konfigurierungskomponente KK zugreifbar. Die in der Figur 1 gezeigte tatsächliche Anordnung entspricht dabei weitgehend der projektierten Anordnung in dem "Projekt". Während es sich bei der in der Figur 1 dargestellten Anordnung um eine aus Gründen der Übersichtlichkeit sehr einfache Anordnung handelt, kann eine reale Anordnung und damit auch ein "Projekt" in der Praxis eine nahezu unbegrenzte Anzahl unterschiedlichster Komponenten, Geräte, Netzsegmente und auch mehrere Konfigurierungskomponenten KK umfassen.

Für den produktiven Betrieb der gezeigten Automatisierungsanordnung müssen die Komponenten AK1, AK2, AK3 mit einem Stationsnamen versehen sein. Um diesen Stationsnamen zuzuweisen, wird durch die Konfigurierungskomponente KK eine Konfigurierungs-Funktion ausgeführt. In einer realen Anlage mit einer Vielzahl von Komponenten und Komponenten-Typen kann dabei nach Gerätetyp vorgefiltert bzw. unterschieden werden, so dass nur ein Teil der verfügbaren Komponenten während einer "Session" mit Stationsnamen versehen wird. Aus Gründen der Übersichtlichkeit wird am vorliegenden Ausführungsbeispiel diese Unterscheidung jedoch nicht vorgenommen.

Nach dem Start der beschriebenen Funktion, die beispielsweise den Namen "Gerätenamen vergeben" haben kann, ermittelt die Konfigurierungskomponente KK alle Komponenten AK1, AK2, AK3 (Geräte) des Datennetzes PN bzw. eines betrachteten Segmentes des Datennetzes PN, beispielsweise über den im Protokoll PROFINET IO definierten Dienst "DCP::Identify(All)". In einem nun folgenden, optionalen Schritt kann die bereits beschriebene Filterung nach den im Projekt enthaltenen Gerätetypen vorgenommen und dadurch eine Teilmenge der Ergebnisliste gebildet werden; bei dem bereits beschriebenen exemplarischen Kommunikationsprotokoll kann dazu der Gerätetyp ("VendorID/DeviceID") bereits aus den aus den einzelnen Komponenten und Geräten abgerufenen Datensatz "DCP::IdentifyResponse" ausgelesen werden.

In einem optionalen Schritt kann es notwendig sein, aufgefundenen Komponenten temporär eine noch nicht vergebenen Netzwerkadresse (beispielsweise IP-Adresse) zuzuweisen.

In einem nun folgenden Schritt werden von den aufgefundenen und ggf. ausgefilterten Komponenten AK1, AK2, AK3 weitere Eigenschaftsinformationen abgerufen, wobei beispielsweise von jeder der Komponenten AK1, AK2, AK3 ein Datensatz "AutoConfiguration" (0xF850) oder alternativ, falls dieser Datensatz nicht existiert, der Datensatz "APIData" (0xF821) und für jedes in diesem Datensatz erwähnte API (API = Application Programming Interface) der API-granulare Datensatz "RealIdentificationData" for one API "(0xF000) abgerufen. Aus diesen ermittelten Datensätzen und Informationen kann der aktuelle "Ausbau" der jeweiligen Komponente AK1, AK2, AK3 bestimmt werden, also beispielsweise eine Liste von vorhandenen Modulen und jeweils in diesen Modulen enthaltene Submodulen. Ein weiterer, interessanter Datensatz "PDRealData" (0xF841) enthält beispielsweise eine Angabe "PDPortDataReal" für die einzelnen Anschlüsse (Ports) des Gerätes bzw. der Komponente AK1, AK2, AK3. Hieraus kann die aktuelle "Nachbarschaft" des Gerätes auf Basis von Namen bzw. auf Basis von MAC-Adressen der an den Ports angeschlossenen Komponenten abgeleitet werden.

Die Figur 2 zeigt schematisch eine Tabelle, eine sog. "Ähnlichkeitsmatrix", mit der die mittels der voran gegangenen Schritte erfassten Daten der tatsächlich in der Automatisierungsanordnung aufgefundenen Komponenten AK1, AK2, AK3 in Bezug gesetzt werden mit projektierten Komponenten PK1, PK2, PK3 in dem "Projekt". Dabei sind die tatsächlich vorhandenen und in den vorangegangenen Schritten ermittelten Komponenten AK1, AK2, AK3 in den Spalten und die projektierten Komponenten PK1, PK2, PK3 in den Zeilen der Ähnlichkeitsmatrix angeordnet. In den Zellen der Matrix, die sich an den Schnittpunkten der projektierten und der tatsächlich vorhandenen Komponenten befinden, werden Ähnlichkeitswerte A11, ..., A33 eingetragen, die zu Beginn der Auswertung beispielsweise mit dem Wert "Null" initialisiert sind. Die projektierten Komponenten PK1, PK2, PK3 werden nacheinander jeweils mit allen oder zumindest einer Auswahl der ermittelten Komponenten AK1, AK2, AK3 verglichen. Sofern beispielsweise der Gerätetyp nicht übereinstimmt, wird der Ähnlichkeitswert beispielsweise auf n/a ("not applicable") gesetzt; der Vergleich kann mit dem nächsten Gerät fortgesetzt werden. Der "online" ermittelte Ausbau, also die Eigenschaften der tatsächlich vorhandenen Komponenten AK1, AK2, AK3, wird mit dem offline-projektierten "Ausbau", also den projektierten Eigenschaften der projektierten Komponenten PK1, PK2, PK3, verglichen. Sofern offline-projektiertes Modul/Submodul mit dem ein "online" ermittelten übereinstimmt oder ein passendes Substitut darstellt, wird der Ähnlichkeitswert erhöht; anderenfalls verringt. Sofern eine aufgefundene Komponente AK1, AK2, AK3 Module oder Submodule aufweist, die in der Projektierung nicht vorhanden sind, soll vorteilhaft der Ähnlichkeitswert nicht verändert werden.

In ähnlicher Weise werden die "Nachbarschaftsbeziehungen" der ermittelten und der projektierten Komponenten verglichen, wobei sich diese Vergleiche an den sog. "Ports", also an den Kommunikationsschnittstellen der Komponenten orientieren. Ist beispielsweise für einen "Port" eine sog. "Topologie" projektiert, die "online" zu einem ähnlichen Gerät führt, so kann der Ähnlichkeitswert erhöht werden. Vorteilhaft kann dabei das in der "Topologie" aufgeführte bzw. projektierte Gerät ebenfalls verglichen werden, so dass beispielsweise der Ähnlichkeitswert nur dann signifikant erhöht wird, wenn das an einem "Port" aufgefundene Gerät vom gleichen Typ ist oder einen ähnlichen Ausbau hat, wie das an demselben "Port" projektierte andere Gerät bzw. Komponente. Anderenfalls kann beispielsweise der Ähnlichkeitswert neutral bleiben oder sogar verringert werden.

Sofern für das in der Figur 2 dargestellte Beispiel gilt, dass die projektierte Komponente PK1 in ihren projektierten Eigenschaften genau der ermittelten Komponente AK1 entspricht, und dasselbe entsprechend für die Komponenten AK2/PK2 und AK3/PK3 gilt, sind die Ähnlichkeitswerte A11, A22, A33 entsprechend maximal (beispielsweise 1), und die anderen Ähnlichkeitswerte A21, ...., A31 entsprechend minimal, beispielsweise "Null". In einem solchen Fall kann die Konfigurierungskomponente KK von einer eindeutigen Zuordnung ausgehen und automatisch der Komponente AK1 den im Projekt der Komponente PK1 zugeordneten Stationsnamen zuweisen, und entsprechend für die Komponenten AK2 und AK3 verfahren.

Sofern die Ähnlichkeitsmatrix ein weniger eindeutiges Ergebnis ergibt, können die solcher Art geprüften Komponenten in einem Dialogschritt beispielsweise in einer Liste einem Anwender dargestellt werden, und zwar beispielsweise so, dass die am besten "passenden" Geräte, dass heißt jene, die am wahrscheinlichsten für die Zuteilung eines bestimmten Stationsnamens in Frage kommen, als oberste in einer Liste aufgeführt werden. Abweichungen zwischen den Eigenschaften der ermittelten Komponenten AK1, AK2, AK3 und den durch die automatische Konfigurierung zugeordneten projektierten Komponenten PK1, PK2, PK3 können dabei jeweils markiert oder herausgestellt werden. Dadurch ist es einem Anwender einfach möglich, einen Vorschlag der Konfigurierungskomponente zu bestätigen oder zu verwerfen bzw. zu korrigieren.

Die zuvor gezeigte Berechnung dieser Ähnlichkeitswerte kann durch die Methoden der sog. "Fuzzy-Logic" vorgenommen werden, um zu verhindern, dass nur exakt gleiche Komponenten mit exakt passenden Eigenschaften zur Laufzeit aufgefunden und zugeordnet werden können. Selbst in den Fällen, in denen eine automatische Zuordnung der projektierten Stationsnamen zu den aufgefundenen Komponenten AK1, AK2, AK3 nicht vorgenommen werden kann, kann durch das vorstehend beschriebene Verfahren zumindest eine Vorauswahl getroffen werden, was die Übersichtlichkeit im entsprechenden Dialog mit der Konfigurierungskomponente KK erhöht und somit den Arbeitsaufwand vermindert. Mit dem beschriebenen Verfahren ist es außerdem möglich, nach einem Ausfall einzelner Komponenten AK1, AK2, AK3 und deren Ersatz durch neue Komponenten mit ggf. abweichenden MAC-Adressen etc. diese ersatzweise eingefügten, neuen Komponenten zu identifizieren, mit einem Stationsnamen zu versehen und somit automatisch in den Betrieb der Automatisierungsanordnung einzugliedern.

## Patentansprüche

1. Verfahren zur Zuweisung jeweils eines Stationsnamens zu einer Anzahl Komponenten (AK1, AK2, AK3) einer industriellen Automatisierungsanordnung,
wobei die Komponenten mittels eines Datennetzes (PN) mit einer Konfigurierungskomponente (KK) verbunden sind, und
wobei während einer Projektierungsphase einige oder alle der Komponenten (PK1, PK2, PK3) in einem Projekt der Konfigurierungskomponente (KK) verzeichnet werden, wobei diesen projektierten Komponenten (PK1, PK2, PK3) in dem Projekt jeweils ein Stationsname und eine Anzahl projektierter Eigenschaften zugeordnet werden,
**dadurch gekennzeichnet,**
**dass** während einer Inbetriebnahmephase oder zur Laufzeit der Automatisierungsanordnung durch die Konfigurierungskomponente (KK)
- in einem ersten Schritt eine Anzahl oder alle Komponenten (AK1, AK2, AK3), die über das Datennetz erreichbar sind, ermittelt werden,
- in einem zweiten Schritt Informationen über jeweilige tatsächliche Eigenschaften der ermittelten Komponenten (AK1, AK2, AK3) von diesen abgerufen und gespeichert werden,
- in einem dritten Schritt für jede ermittelte Komponente (AK1, AK2, AK3) ein jeweiliger Ähnlichkeitswert (A11, ..., A33) in Bezug auf die projektierten Komponenten (PK1, PK2, PK3) anhand des Grades der Übereinstimmung der tatsächlichen Eigenschaften der ermittelten Komponenten (AK1, AK2, AK3) mit den projektierten Eigenschaften der projektierten Komponenten (PK1, PK2, PK2) bestimmt wird, und
- in einem vierten Schritt einigen oder allen ermittelten Komponenten (AK1, AK2, AK3) jeweils der projektierte Stationsname derjenigen projektierten Komponente (PK1, PK2, PK3) zugewiesen wird, zu der der beste Ähnlichkeitswert (A11, ..., A33) besteht.

2. Verfahren nach Patentanspruch 1,
**dadurch gekennzeichnet,**
**dass** in dem dritten Schritt als projektierte und als tatsächliche Eigenschaften Nachbarschaftsbeziehungen zu anderen der Komponenten (AK1, AK2, AK3) verwendet werden.

3. Verfahren nach einem der vorhergehenden Patentansprüche,
**dadurch gekennzeichnet,**
**dass** bei den projektierten und bei den ermittelten Komponenten (AK1, AK2, AK3) jeweils nach Gerätetypen unterschieden wird, wobei im dritten Schritt die Ähnlichkeitswerte (A11, ..., A33) jeweils zwischen projektierten und ermittelten Komponenten (AK1, AK2, AK3) desselben Gerätetyps bestimmt und in dem vierten Schritt verwendet werden.

4. Verfahren nach Patentanspruch 3,
**dadurch gekennzeichnet,**
**dass** im ersten Schritt nach Komponenten (AK1, AK2, AK3) eines oder mehrerer vorher spezifizierter Gerätetypen gesucht wird.

5. Verfahren nach einem der vorhergehenden Patentansprüche,
**dadurch gekennzeichnet,**
**dass** in dem ersten Schritt in den Fällen, in denen eine ermittelte Komponente (AK1, AK2, AK3) keine Kommunikationsadresse aufweist, dieser Komponente (AK1, AK2, AK3) zumindest für die Dauer der Durchführung des nachfolgenden Schrittes eine temporär gültige Kommunikationsadresse zugewiesen wird.

6. Verfahren nach einem der vorhergehenden Ansprüche,
**dadurch gekennzeichnet,**
**dass** in dem dritten Schritt zumindest eine Ähnlichkeitsmatrix erstellt wird, wobei in den Zellen der Ähnlichkeitsmatrix jeweils ein Ähnlichkeitswert (A11, ..., A33) zwischen einer projektierten und einer ermittelten der Komponenten (AK1, AK2, AK3) speicherbar ist.

7. Verfahren nach einem der vorhergehenden Patentansprüche,
**dadurch gekennzeichnet,**
**dass** in dem Datennetz (PN) das Kommunikationsprotokoll PROFINET IO verwendet wird.

8. Verfahren nach Patentanspruch 7,
**dadurch gekennzeichnet,**
**dass** in dem zweiten Schritt als Quelle für die Informationen jeweils aus den ermittelten Komponenten (AK1, AK2, AK3) standardisierte Datensätze abgerufen werden.

9. Verfahren nach einem der vorhergehenden Patentansprüche,
**dadurch gekennzeichnet,**
**dass** in dem vierten Schritt vor der Zuweisung zumindest in den Fällen, in denen zwischen dem besten und einem nächstbesten Ähnlichkeitswert (A11, ..., A33) ein vordefinierter Abstandswert unterschritten wird, eine Abfragemeldung an einen Benutzer ausgegeben wird.

10. Verfahren nach einem der vorhergehenden Patentansprüche,
**dadurch gekennzeichnet,**
**dass** für die Erstellung und/oder die Auswertung der Ähnlichkeitswerte (A11, ..., A33) eine Fuzzy-Logic verwendet wird.

11. Konfigurierungskomponente (KK) zur Zuweisung jeweils eines Stationsnamens zu einer Anzahl von Komponenten (AK1, AK2, AK3) einer industriellen Automatisierungsanordnung,
wobei die Komponenten (AK1, AK2, AK3) mittels eines Datennetzes (PN) mit der Konfigurierungskomponente (KK) verbunden sind,
wobei einige oder alle der Komponenten (PK1, PK2, PK3) in einem Projekt der Konfigurierungskomponente (KK) verzeichnet sind,
wobei diesen projektierten Komponenten (PK1, PK2, PK3) in dem Projekt jeweils ein Stationsname und eine Anzahl projektierter Eigenschaften zugeordnet sind,
**dadurch gekennzeichnet,**
**dass** die Konfigurierungskomponente (KK) derart eingerichtet ist, dass durch diese während einer Inbetriebnahmephase oder zu einer Laufzeit der Automatisierungsanordnung
- in einem ersten Schritt eine Anzahl oder alle Komponenten (AK1, AK2, AK3), die über das Datennetz (PN) erreichbar sind, ermittelt werden,
- in einem zweiten Schritt Informationen über jeweilige tatsächliche Eigenschaften der ermittelten Komponenten (AK1, AK2, AK3) von diesen abgerufen und gespeichert werden,
- in einem dritten Schritt für jede ermittelte Komponente (AK1, AK2, AK3) ein jeweiliger Ähnlichkeitswert (A11, ..., A33) in Bezug auf die projektierten Komponenten (PK1, PK2, PK3) anhand des Grades der Übereinstimmung der tatsächlichen Eigenschaften der ermittelten Komponenten (AK1, AK2, AK3) mit den projektierten Eigenschaften der projektierten Komponenten (PK1, PK2, PK3) bestimmt wird, und
- in einem vierten Schritt einigen oder allen ermittelten Komponenten (AK1, AK2, AK3) jeweils der projektierte Stationsname, derjenigen projektierten Komponente (PK1, PK2, PK3) zugewiesen wird, zu der der beste Ähnlichkeitswert (A11, ..., A33) besteht.

12. Konfigurierungskomponente (KK) nach Patentanspruch 11,
**dadurch gekennzeichnet,**
**dass** die Konfigurierungskomponente (KK) zur Bestimmung von Nachbarschaftsbeziehungen zwischen den ermittelten Komponenten (AK1, AK2, AK3) und zur Inbezugsetzung zu projektierten Nachbarschaftsbeziehungen zwischen den projektierten der Komponenten (PK1, PK2, PK3) eingerichtet ist.

13. Konfigurierungskomponente (KK) nach Patentanspruch 11 oder 12,
**dadurch gekennzeichnet,**
**dass** den projektierten und den in dem Datennetz (PN) tatsächlich angeordneten Komponenten (AK1, AK2, AK3) jeweils ein Gerätetyp zugeordnet ist, wobei die Konfigurierungskomponente (KK) derart eingerichtet ist, dass in dem dritten Schritt die Ähnlichkeitswerte (A11, ..., A33) jeweils zwischen projektierten und ermittelten Komponenten (AK1, AK2, AK3) desselben Gerätetyps bestimmt und in dem vierten Schritt verwendet werden.

14. Konfigurierungskomponente (KK) nach Patentanspruch 13,
**dadurch gekennzeichnet,**
**dass** die Konfigurierungskomponente (KK) derart eingerichtet ist, dass einer oder mehrere Gerätetypen vorgebbar sind, wobei in dem ersten Schritt nur Komponenten (AK1, AK2, AK3) des oder der spezifizierten Gerätetypen gesucht und in dem dritten Schritt nur Ähnlichkeitswerte (A11, ..., A33) zwischen projektierten und tatsächlichen Komponenten (AK1, AK2, AK3) desselben Typs bestimmt werden.

15. Konfigurierungskomponente (KK) nach einem der Patentansprüche 11 bis 14,
**dadurch gekennzeichnet,**
**dass** die Konfigurierungskomponente (KK) zur Zuweisung einer temporär gültigen Kommunikationsadresse zu solchen der ermittelten Komponenten (AK1, AK2, AK3) eingerichtet ist, die keine gültige Kommunikationsadresse aufweisen.

16. Konfigurierungskomponente (KK) nach einem der Patentansprüche 11 bis 15,
**dadurch gekennzeichnet,**
**dass** die Konfigurierungskomponente (KK) eine Ähnlichkeitsmatrix zur Speicherung der in dem dritten Schritt bestimmten Ähnlichkeitswerte (A11, ..., A33) aufweist, wobei jede Zelle der Ähnlichkeitsmatrix zur Speicherung eines Ähnlichkeitswertes (A11, ..., A33) zwischen einer projektierten und einer ermittelten der Komponenten (AK1, AK2, AK3) ausgebildet ist.

17. Konfigurierungskomponente (KK) nach einem der Patentansprüche 11 bis 16,
**dadurch gekennzeichnet,**
**dass** die Konfigurierungskomponente (KK) zur Verwendung des Kommunikationsprotokolls PROFINET IO für die Kommunikation mit den ermittelten der Komponenten (AK1, AK2, AK3) eingerichtet ist.

18. Konfigurierungskomponente (KK) nach Patentanspruch 17,
**dadurch gekennzeichnet,**
**dass** die Konfigurierungskomponente (KK) zum Abruf standardisierter Datensätze aus den ermittelten Komponenten (AK1, AK2, AK3) eingerichtet ist, wobei die Konfigurierungskomponente (KK) zur Verwendung dieser standardisierten Datensätze als Quelle für die Informationen über jeweilige tatsächliche Eigenschaften der jeweiligen Komponenten (AK1, AK2, AK3) eingerichtet ist.

19. Konfigurierungskomponente (KK) nach einem der Patentansprüche 11 bis 18,
**dadurch gekennzeichnet,**
**dass** die Konfigurierungskomponente (KK) zur Ausgabe einer Abfragemeldung zumindest in den Fällen vor der Zuweisung in dem vierten Schritt eingerichtet ist, in denen zwischen dem besten Ähnlichkeitswert (A11, ..., A33) und einem nächstbesten Ähnlichkeitswert (A11, ..., A33) ein vordefinierter Abstandswert unterschritten ist.

20. Konfigurierungskomponente (KK) nach einem der Patentansprüche 11 bis 19,
**dadurch gekennzeichnet,**
**dass** die Konfigurierungskomponente (KK) zur Verwendung einer Fuzzy-Logic für die Erstellung und/oder Auswertung der Ähnlichkeitswerte (A11, ..., A33) eingerichtet ist.

## Claims

1. Method for assigning a respective station name to a number of components (AK1, AK2, AK3) of an industrial automation arrangement,
wherein the components are connected to a configuration component (KK) by means of a data network (PN), and
wherein during a projection phase some or all of the components (PK1, PK2, PK3) are recorded in a project for the configuration component (KK), each of these projected components (PK1, PK2, PK3) being allocated a station name and a number of projected properties in the project,
**characterized**
**in that** during a startup phase or during the operating time of the automation arrangement the configuration component (KK)
- ascertains a number of or all components (AK1, AK2, AK3) which can be reached via the data network in a first step,
- retrieves and stores information about respective actual properties of the ascertained components (AK1, AK2, AK3) from the latter in a second step,
- determines a respective similarity value (A11, ..., A33) for each ascertained component (AK1, AK2, AK3) in relation to the projected components (PK1, PK2, PK3) using the degree of match between the actual properties of the ascertained components (AK1, AK2, AK3) and the projected properties of the projected components (PK1, PK2, PK3) in a third step, and
- assigns each of some or all ascertained components (AK1, AK2, AK3) the projected station name of that projected component (PK1, PK2, PK3) for which there is the best similarity value (A11, ..., A33) in a fourth step.

2. Method according to Patent Claim 1,
**characterized**
**in that** the projected properties and the actual properties used in the third step are vicinity relationships with other instances of the components (AK1, AK2, AK3).

3. Method according to either of the preceding patent claims,
**characterized**
**in that** the projected components and the ascertained components (AK1, AK2, AK3) are each distinguished according to device types, wherein the similarity values (A11, ..., A33) are each determined between projected and ascertained components (AK1, AK2, AK3) of the same device type in the third step and are used in the fourth step.

4. Method according to Patent Claim 3,
**characterized**
**in that** the first step involves searching for components (AK1, AK2, AK3) of one or more previously specified device types.

5. Method according to one of the preceding patent claims,
**characterized**
**in that** in the first step, in those cases in which an ascertained component (AK1, AK2, AK3) has no communication address, this component (AK1, AK2, AK3) is assigned a temporarily valid communication address as least for the period for which the subsequent step is performed.

6. Method according to one of the preceding claims,
**characterized**
**in that** the third step involves creating at least one similarity matrix, wherein the cells of the similarity matrix can each be used to store a similarity value (A11, ..., A33) between a projected and an ascertained instance of the components (AK1, AK2, AK3).

7. Method according to one of the preceding patent claims,
**characterized**
**in that** the communication protocol PROFINET IO is used in the data network (PN).

8. Method according to Patent Claim 7,
**characterized**
**in that** in the second step, standardized data records are retrieved from each of the ascertained components (AK1, AK2, AK3) as a source for the information.

9. Method according to one of the preceding patent claims,
**characterized**
**in that** in the fourth step, prior to the assignment, a query message is output to a user at least in the cases in which a predefined interval value between the best and a next best similarity value (A11, ..., A33) is undershot.

10. Method according to one of the preceding patent claims,
**characterized**
**in that** fuzzy logic is used for creating and/or evaluating the similarity values (A11, ..., A33).

11. Configuration component (KK) for assigning a respective station name to a number of components (AK1, AK2, AK3) of an industrial automation arrangement,
wherein the components (AK1, AK2, AK3) are connected to the configuration component (KK) by means of a data network (PN),
wherein single instances or all of the components (PK1, PK2, PK3) are recorded in a project for the configuration component (KK),
wherein these projected components (PK1, PK2, PK3) are each allocated a station name and a number of projected properties in the project,
**characterized**
**in that** the configuration component (KK) is set up such that during a startup phase or during operating time of the automation arrangement it
- ascertains a number of or all components (AK1, AK2, AK3) which can be reached via the data network (PN) in a first step,
- retrieves and stores information about respective actual properties of the ascertained components (AK1, AK2, AK3) from the latter in a second step,
- determines a respective similarity value (A11, ..., A33) for each ascertained component (AK1, AK2, AK3) in relation to the projected components (PK1, PK2, PK3) using the degree of match between the actual properties of the ascertained components (AK1, AK2, AK3) and the projected properties of the projected components (PK1, PK2, PK3) in a third step, and
- assigns each of some or all ascertained components (AK1, AK2, AK3) the projected station name of that projected component (PK1, PK2, PK3) for which there is the best similarity value (A11, ..., A33) in a fourth step.

12. Configuration component (KK) according to Patent Claim 11,
**characterized**
**in that** the configuration component (KK) is set up to determine vicinity relationships between the ascertained components (AK1, AK2, AK3) and to relate them to projected vicinity relationships between the projected instances of the components (PK1, PK2, PK3).

13. Configuration component (KK) according to Patent Claim 11 or 12,
**characterized**
**in that** the projected components and the components (AK1, AK2, AK3) which are actually arranged in the data network (PN) each have an associated device type, wherein the configuration component (KK) is set up such that the similarity values (A11, ..., A33) are each determined between projected and ascertained components (AK1, AK2, AK3) of the same device type in the third step and are used in the fourth step.

14. Configuration component (KK) according to Patent Claim 13,
**characterized**
**in that** the configuration component (KK) is set up such that one or more device types are prescribable, wherein the first step involves searching only for components (AK1, AK2, AK3) of the specified device type(s) and the third step involves determining only similarity values (A11, ..., A33) between projected and actual components (AK1, AK2, AK3) of the same type.

15. Configuration component (KK) according to one of Patent Claims 11 to 14,
**characterized**
**in that** the configuration component (KK) is set up to assign a temporarily valid communication address to such instances of the ascertained components (AK1, AK2, AK3) as have no valid communication address.

16. Configuration component (KK) according to one of Patent Claims 11 to 15,
**characterized**
**in that** the configuration component (KK) has a similarity matrix for storing the similarity values (A11, ..., A33) determined in the third step, wherein each cell of the similarity matrix is designed to store a similarity value (A11, ..., A33) between a projected and an ascertained instance of the components (AK1, AK2, AK3).

17. Configuration component (KK) according to one of Patent Claims 11 to 16,
**characterized**
**in that** the configuration component (KK) is set up to use the communication protocol PROFINET IO for the communication with the ascertained instances of the components (AK1, AK2, AK3).

18. Configuration component (KK) according to Patent Claim 17,
**characterized**
**in that** the configuration component (KK) is set up to retrieve standardized data records from the ascertained components (AK1, AK2, AK3), wherein the configuration component (KK) is set up to use these standardized data records as a source for the information about respective actual properties of the respective components (AK1, AK2, AK3).

19. Configuration component (KK) according to one of Patent Claims 11 to 18,
**characterized**
**in that** the configuration component (KK) is set up to output a query message at least in those cases prior to the assignment in the fourth step in which a predefined interval value between the best similarity value (A11, ..., A33) and a next best similarity value (A11, ..., A33) is undershot.

20. Configuration component (KK) according to one of Patent Claims 11 to 19,
**characterized**
**in that** the configuration component (KK) is set up to use fuzzy logic for creating and/or evaluating the similarity values (A11, ..., A33).

## Revendications

1. Procédé d'affectation de respectivement un nom de station à un certain nombre de composants (AK1, AK2, AK3) d'un agencement d'automatisation industrielle,
dans lequel les composants sont reliés à un composant (KK) de configuration au moyen d'un réseau (PN) de données et dans lequel, pendant une phase d'étude, certains des composants (PK1, PK2, PK3) ou tous les composants ( PK1, PK2, PK3) sont répertoriés dans un projet du composant ( KK ) de configuration, un nom de station et un certain nombre de propriétés projetées étant affectés dans le projet à ces composants ( PK1, PK2, PK3 ) projetés,
caractérisé,
pendant une phase de mise en fonctionnement ou pour la durée de fonctionnement de l'agencement d'automatisation, il est, par le composant ( KK ) de configuration,
- dans un premier stade, déterminé un certain nombre ou tous les composants ( AK1, AK2, AK3 ) qui peuvent être atteints par le réseau de données,
- dans un deuxième stade, des informations sur les propriétés respectives effectives des composants ( AK1, AK2, AK3) déterminés sont appelées par ceux-ci et mémorisées,
- dans un troisième stade, pour chaque composant ( AK1, AK2, AK3) déterminé, une valeur (A11, ..., A33) de similitude respective par rapport aux composants (PK1, PK2, PK3) projetés est déterminée au moyen du degré de coïncidence des propriétés effectives des composants (AK1, AK2, AK3 ) déterminés avec les propriétés projetées des composants ( PK1, PK2, PK3 ) projetés et
- dans un quatrième stade, il est affecté, à certains des composants (AK1, AK2, AK3) déterminés ou à tous les composants ( AK1, AK2, AK3 ) déterminés, respectivement le nom de station projeté du composant ( PK1, PK2, PK3 ) projeté, qui a la valeur ( A11, ..., A33 ) de similitude la meilleure.

2. Procédé suivant la revendication 1,
**caractérisé en ce que** l'on utilise dans le troisième stade, comme propriété projetée et comme propriété effective, des relations de voisinage à d'autres composants (AK1, AK2, AK3 ).

3. Procédé suivant l'une des revendications précédentes,
**caractérisé en ce que**, pour les composants (AK1, AK2, AK3 ) projetés et pour les composants (AK1, AK2, AK3 ) déterminés, on distingue, respectivement, suivant le type d'appareil, dans lequel, dans le troisième stade, on détermine les valeurs (A11, ..., A33) de similitude, respectivement entre des composants (AK1, AK2, AK3) projetés et déterminés du même type d'appareil et on les utilise dans le quatrième stade.

4. Procédé suivant la revendication 3,
**caractérisé en ce que** l'on recherche dans le premier stade des composants (AK1, AK2, AK3) d'un ou de plusieurs types d'appareil spécifiés au préalable.

5. Procédé suivant l'une des revendications précédentes,
**caractérisé en ce que**, dans le premier stade, dans les cas dans lesquels un composant ( AK1, AK2, AK3) déterminé n'a pas d'adresse de communication, on affecte à ce composant (AK1, AK2, AK3 ), au moins pendant la durée où s'effectue le stade suivant, une adresse de communication valable temporairement.

6. Procédé suivant l'une des revendications précédentes,
**caractérisé en ce que**, dans le troisième stade, on établit au moins une matrice de similitude, dans lequel on peut mémoriser, dans les cellules de la matrice de similitude, respectivement une valeur (A11, ..., A33) de similitude en l'un projeté et l'un déterminé des composants (AK1, AK2, AK3 ).

7. Procédé suivant l'une des revendications précédentes,
**caractérisé en ce que** l'on utilise le protocole de communication PROFINET IO dans le réseau ( PN ) de données.

8. Procédé suivant la revendication 7,
**caractérisé en ce que**, dans le deuxième stade, on appelle des jeux de données normalisés comme source des informations sur les composants ( AK1, AK2, AK3 ) déterminés.

9. Procédé suivant l'une des revendications précédentes,
**caractérisé en ce que**, dans le quatrième stade, on émet, avant l'affectation, au moins dans les cas dans lesquels une valeur d'écart définie à l'avance est dépassée par le bas entre la valeur (A11, ..., A33) de similitude la meilleure et une valeur ( A11, ..., A33 ) de similitude juste après la meilleure, un message de demande à un utilisateur.

10. Procédé suivant l'une des revendications précédentes,
**caractérisé en ce que** l'on utilise un logique floue pour l'établissement et/ou l'exploitation des valeurs (A11, ..., A33 ) de similitude.

11. Composant (KK) de configuration pour l'affectation respectivement d'un nom de station à un certain nombre de composants (AK1, AK2, AK3 ) d'un agencement d'automatisation industrielle,
dans lequel les composants (AK1, AK2, AK3 ) sont reliés aux composants ( KK ) de configuration au moyen d'un réseau ( PN ) de données,
dans lequel certains des composants ( PK1, PK2, PK3 ) ou tous les composants (PK1, PK2, PK3) sont répertoriés dans un projet du composant ( KK ) de configuration,
dans lequel un nom de station et un certain nombre de propriétés projetées sont affectés à ces composants ( PK1, PK2, PK3 ) projetés dans le projet,
**caractérisé**
**en ce que** le composant ( KK ) de configuration est agencé de manière à ce que, par celui-ci, pendant une phase de mise en fonctionnement ou pendant un temps de fonctionnement de l'agencement de l'automatisation,
- dans un premier stade, il est déterminé un certain nombre de composants (AK1, AK2, AK3 ) ou tous les composants (AK1, AK2, AK3 ) qui peuvent être atteints par le réseau ( PN ) de données,
- dans un deuxième stade, des informations sur les propriétés respectives effectives des composants ( AK1, AK2, AK3) déterminés sont appelées par ceux-ci et mémorisées,
- dans un troisième stade, pour chaque composant ( AK1, AK2, AK3) déterminé, une valeur (A11, ..., A33) de similitude respective par rapport aux composants (PK1, PK2, PK3) projetés est déterminée au moyen du degré de coïncidence des propriétés effectives des composants (AK1, AK2, AK3 ) déterminés aux propriétés projetées des composants ( PK1, PK2, PK3 ) projetés et
- dans un quatrième stade, il est affecté, à certains des composants (AK1, AK2, AK3) déterminés ou à tous les composants ( AK1, AK2, AK3 ) déterminés, respectivement le nom de station projeté du composant ( PK1, PK2, PK3 ) projeté, qui a la valeur ( A11, ..., A33 ) de similitude la meilleure.

12. Composant ( KK ) de configuration suivant la revendication 11,
**caractérisé**
**en ce que** le composant ( KK ) de configuration est conçu pour la détermination de relations de voisinage entre les composants (AK1, AK2, AK3) déterminés et pour la mise en relation des relations de proximité projetées entre ceux des composants ( PK1, PK2, PK3 ) qui sont projetés.

13. Composant ( KK ) de configuration suivant la revendication 11 ou 12,
**caractérisé**
**en ce qu'**il est affecté respectivement un type d'appareil aux composants ( AK1, AK2, AK3 ) projetés et aux composants ( AK1, AK2, AK3 ) mis effectivement dans le réseau ( PN ) de données, le composant ( KK ) de configuration étant conçu pour, dans le troisième stade, déterminer les valeurs (A11, ..., A33) de similitude respectivement entre les composants (AK1, AK2, AK3 ) projetés et déterminés du même type d'appareil et les utiliser dans le quatrième stade.

14. Composant ( KK ) de configuration suivant la revendication 13,
**caractérisé**
**en ce que** le composant ( KK ) de configuration est conçu pour pouvoir donner à l'avance un type d'appareil ou plusieurs types d'appareil, dans lequel, dans le premier stade, il n'est recherché que des composants (AK1, AK2, AK3) du type d'appareil ou des types d'appareil spécifiés et dans le troisième stade, il n'est déterminé que des valeurs ( A11, ..., A33) de similitude entre des composants (AK1, AK2, AK3) projetés et effectifs du même type.

15. Composant (KK) de configuration suivant l'une des revendications 11 à 14,
**caractérisé**
**en ce que** le composant ( KK ) de configuration est conçu pour l'affectation d'une adresse de communication valable temporairement à ceux des composants (AK1, AK2, AK3) déterminés qui n'ont pas d'adresse de communication valable.

16. Composant (KK) de configuration suivant l'une des revendications 11 à 15,
**caractérisé**
**en ce que** le composant ( KK ) de configuration a une matrice de similitude pour la mémorisation des valeurs ( A11, ..., A33 ) de similitude déterminées dans le troisième stade, dans lequel chaque cellule de la matrice de similitude est constituée pour la mémorisation d'une valeur (A11, ..., A33 ) de similitude entre l'un projeté et l'un déterminé des composants (AK1, AK2, AK3 ).

17. Composant (KK) de configuration suivant l'une des revendications 11 à 16,
**caractérisé**
**en ce que** le composant (KK) des configurations est conçu pour l'utilisation du protocole de communication PROFINET IO pour la communication avec les composants (AK1, AK2, AK3 ) qui ont été déterminés.

18. Composant ( KK ) de configuration suivant la revendication 17,
**caractérisé**
**en ce que** le composant ( KK ) de configuration est conçu pour appeler des jeux de données normalisés des composants (AK1, AK2, AK3) déterminés, le composant (KK) de configuration étant conçu pour l'utilisation de ces jeux de données normalisés comme source d'informations sur des propriétés effectives respectives des composants (AK1, AK2, AK3) respectifs.

19. Composant ( KK ) de configuration suivant l'une des revendications 11 à 18,
**caractérisé**
**en ce que** le composant ( KK ) de configuration est conçu pour l'émission d'un message de demande, au moins dans les cas avant l'affectation dans le quatrième stade dans lesquels une valeur d'écart définie à l'avance est dépassée par le bas entre la valeur ( A11, ..., A33 ) de similitude la meilleure et une valeur ( A11, ..., A33 ) de similitude venant immédiatement après.

20. Composant (KK) de configuration suivant l'une des revendications 11 à 19,
**caractérisé**
**en ce que** le composant ( KK ) de configuration est conçu pour l'utilisation d'une logique floue pour l'établissement et/ou pour l'exploitation des valeurs ( A11, ..., A33 ) de similitude.
